(19) Europäisches Patentamt
European Patent Office
Office européen des brevets

(11) **EP 4 498 634 A1**

(12) **EUROPEAN PATENT APPLICATION**

(43) Date of publication:
**29.01.2025 Bulletin 2025/05**

(21) Application number: **24187992.3**

(22) Date of filing: **11.07.2024**

(51) International Patent Classification (IPC):
**H04L 9/00** $^{(2022.01)}$

(52) Cooperative Patent Classification (CPC):
**H04L 9/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.07.2023  IT 202300015678**

(71) Applicant: **STMicroelectronics International N.V.
1228 Plan-les-Ouates, Geneva (CH)**

(72) Inventor: **VENEROSO, Amedeo
81100 Caserta (IT)**

(74) Representative: **Buzzi, Notaro & Antonielli d'Oulx S.p.A.
Corso Vittorio Emanuele II, 6
10123 Torino (IT)**

(54) **A METHOD FOR TRANSMITTING DATA PRIVACY PROTECTED BY ENCRYPTION AND CORRESPONDING SYSTEM**

(57)     Described herein is a method (1000) for transmitting data values ($b_1....b_7$) privacy protected by encryption from a set of data collecting stations ($SM_1...SM_7$) collecting respective data values from a respective environment and transmitting the respective set of data values ($b_1....b_7$) to a using entity (PS) located remotely with respect to said collecting stations ($SM_1...SM_7$), the method comprising encrypting (210) said set of data values ($b_1....b_7$) by a fully homomorphic encryption using a secret key (s) to obtain a plurality of respective encrypted data values ($E(b_1)...E(b_7)$), aggregating (220) said encrypted remote data ($E(b_1)...E(b_7)$) of at least a subset ($b_1...b_3$, $b_4...b_7$) of said set of said encrypted remote data in a respective encrypted aggregated value ($E(b_1+b_2+b_3),E(b_4+b_5+b_6+b_7)$) performing a sum of the respective encrypted data values of said at least a subset $b_1...b_3$, $b_4...b_7$), said encrypting (210) being performed before said aggregating (220), in particular at said collecting stations ($SM_1...SM_7$),
performing (300) one or more functions on the basis of said set of data values ($b_1....b_7$) at said using entity (PS), the method further comprising
supplying (230) said at least one encrypted aggregated value ($E(b_1+b_2+b_3),E(b_4+b_5+b_6+b_7)$) to said using entity (PS), which is configured to receive (500) said secret key (s) from a separated entity (11), in particular a server or a cloud,
decrypting (240) using said secret key (s) at said at least a using entity (PS) said at least one encrypted aggregated value ($E(b_1+b_2+b_3),E(b_4+b_5+b_6+b_7)$) obtaining a decrypted sum ($b_{tot}$) of respective data values $b_1....b_7$),
performing (300) one or more data-related functions (F) on the basis of said decrypted sum ($b_{tot}$) of said respective data values ($b_1....b_7$) at said using entity (PS).

Fig. 5

**Description**

Technical field

The embodiments of the present disclosure relate to techniques for transmitting data values privacy protected by encryption from a set of collecting stations transmitting a respective set of data values to a using entity located remotely with respect to said remote stations, encrypting said set of remote data by an encryption.

In particular the disclosure refers to solutions for smart metering of energy consumption values, comprising measuring a set of measured energy values consumed by respective energy consuming environments by respective smart energy meters, and supplying said measured energy values to at least an energy consumption using entity located remotely with respect to said energy consuming environments,
performing one or more energy-related functions, on the basis of said set of measured energy values at said energy consumption using entity, such data being supplied encrypted and decrypted at the using station.

More in particular, the solutions here described are to a using entity embodied by a power station. Performing one or more energy-related functions may comprise for instance, monitoring and/or energy distribution controlling and/or billing.

Description of the prior art

It is known the need to transmit data values which are acquired, or collected, in particular measured, in a given environment, in privacy protected manner, using encryption.

Under this view, a smart meter is a utility metering device (gas, energy, electricity, water), which collect, or acquires, in particular measure, data values, e.g. utility consumption values, in particular energy consumption values, and that is connected to the Internet and is sometimes augmented by a secure element that performs cryptographic operations (like signatures, etc.) on the collected data.

Smart meters may have multiple benefits for energy management, especially during energetic crises, as they allow automated meter reading, improved load forecasting and network management, energy and emissions reductions obtained from real-time informational feedback, and demand shifting which may result economically beneficial.

However, smart metering presents a significant privacy risk, instituting several regulatory safeguards. Among the different data collected regarding metered appliances there may be socio-economic and demographic information.

Object and summary

Considering the foregoing, an object of various embodiments of the present disclosure is to provide solutions that are able to overcome one or more of the limits of the prior art.

According to one or more embodiments, one or more of the previous objects are achieved by a method for transmitting data values privacy protected by encryption having the distinctive elements specified in the ensuing claims. The embodiments moreover concern a corresponding system for transmitting data values privacy protected by encryption.

The claims form an integral part of the technical teaching of the disclosure provided herein.

As mentioned previously, various embodiments of the present disclosure regard a method for transmitting data values privacy protected by encryption from a set of data collecting stations collecting respective data values from a respective environment and transmitting the respective set of data values to a using entity located remotely with respect to said collecting stations ,

the method comprising encrypting said set of data values by a fully homomorphic encryption using a secret key to obtain a plurality of respective encrypted data values, aggregating said encrypted remote data of at least a subset of said set of said encrypted remote data in a respective encrypted aggregated value performing a sum of the respective encrypted data values of said at least a subset, said encrypting being performed before said aggregating, in particular at said collecting stations,
performing one or more functions on the basis of said set of data values at said using entity,
the method further comprising
supplying said at least one encrypted aggregated value to said using entity, which is configured to receive said secret key from a separated entity, in particular a server or a cloud,
decrypting using said secret key at said at least a using entity said at least one encrypted aggregated value obtaining a decrypted sum of respective data values,
performing one or more data-related functions on the basis of said decrypted sum of said respective data values at said using entity.

In variant embodiments, said data values are utility consumption values, obtained by a smart metering of utility consumption values, comprising measuring a set of measured utility consumption values consumed by respective utility consuming environments by respective smart utility meters,

supplying said measured utility values to at least a utility consumption using entity located remotely with respect to said utility consuming environments,
performing one or more functions on the basis of said set of measured utility values at said using entity.

In variant embodiments, said utility consumption values are energy consumption values and said smart utility meters are smart energy meters.
In variant embodiments, said encrypting said set of data values by a fully homomorphic encryption using a secret key to obtain a plurality of respective encrypted collected data values, comprises,

given an integer number and a ring defining integer identifying a ring of integers modulo said ring defining integer;

- generate a number $N$ of random numbers, i.e. belonging to a set of N-vectors over the ring;
- compute a summation modulo said ring defining integer of each $j$-$th$ random number in said number $N$ of random numbers while a corresponding secret key binary coefficient is equal to one;
- to said summation, also add a data value to encrypt as plaintext;
- finally, add a Gaussian noise $e$, obtaining a LWE summation value, as the the sum of the the data value and said summation modulo said ring defining integer plus the noise
- obtain a LWE ciphertext a vector comprising as elements the random numbers and the LWE summation as last element corresponding to an encrypted data value ($E$), and

said decryption comprises using said secret key at said at least a data value using entity, said at least one encrypted aggregated value ($E,E$) obtaining a decrypted sum of respective collected data values, comprising :

- compute a summation modulo said ring defining integer of each $j$-$th$ random number in said number $N$ of random numbers while a corresponding secret key binary coefficient is equal to one;
- subtract said summation modulo said ring defining integer from the last component of said ciphertext corresponding to an encrypted data value ($E$), which is the LWE summation value, obtaining a decrypted data value.

In variant embodiments, said using entity is a power station which distributes energy to said environments as a function of said sum of said respective measured energy values at said energy consumption using entity.
In variant embodiments, the stations in said set of collecting stations comprise a respective Secure element and said separated entity shares with each secure element a set of Zero Tokens, corresponding to an encrypted zero data value encrypted by said encryption operation, each identified by a respective identifier, stored previously in the Secure Element with respect to encryption operations, in particular when the Secure Element is created,

during said encryption, said Secure Element is configured to randomly select a subset of said set of zero tokens, and generate respective random scalar weights and a vector containing said scalar weights, said identifiers and said encrypted sum of data values, corresponding to said encrypted data value ($E$), which are sent to the using entity through the respective aggregator,
decrypting at the using entity using the pre-shared token identifier and the weights to compute the total of the collected data values as subtraction of the result to the last component of the encrypted data values (E).

In variant embodiments, said sending to the using entity through the respective aggregator includes aggregating said encrypted data values ($E$) of at least a subset of said set of said encrypted measured data values, and sending to the to the using entity all the corresponding scalar weights and identifiers and a total sum of each encrypted sum data value of the corresponding subset of smart meters.
In variant embodiments, said aggregating said encrypted measured data values is performed without decrypting encrypted measured data values.
In variant embodiments, said secret key is made available for decryption only to a using entity.
In variant embodiments, said secret key is stored in a secure element accessible to a station or smart meter for performing encryption.
Variant embodiments of the solution here described regard also a system for transmitting data values privacy protected by encryption from a set of data collecting stations collecting respective data values from a respective environment and transmitting the respective set of data values to a using entity located remotely with respect to said collecting stations,

a data values using entity located remotely with respect to said data value consuming environments to which said set of stations is configured to supply said measured data values,

said data values using entity being configured to perform one or more functions on the basis of said set of collected data values,

said system being configured to encrypt said measured data values by a fully homomorphic encryption using a secret key to obtain a plurality of respective encrypted data values,

said system comprising one or more aggregating entity configured to aggregate said encrypted data values of at least a subset of said set of said encrypted data values in a respective encrypted aggregated value performing a sum of the respective encrypted data values of said at least a subset, said encryption being performed before said aggregating, in particular at said stations,

said one or more aggregating entity being configure to supply said at least one encrypted aggregated value to said at least a data values consumption using entity located remotely with respect to said data using environments, which is configured to receive said secret key from a separated entity, in particular a server or a cloud,

said data value using entity being configure to decrypt using said secret key said at least one encrypted aggregated value obtaining a decrypted sum of respective collected data values, and

to perform one or more data-related functions on the basis of said sum of said respective collected data values at said data values using entity.

In variant embodiments, said data values are utility consumption values, obtained by a smart metering of utility consumption values, comprising measuring a set of measured utility consumption values consumed by respective utility consuming environments by respective smart utility meters,

supplying said measured utility values to at least a utility consumption using entity located remotely with respect to said utility consuming environments,

performing one or more functions on the basis of said set of measured utility values at said using entity.

In variant embodiments, said utility consumption values are energy consumption values and said smart utility meters are smart energy meters.

In variant embodiments, said encrypting said collected data value using a secret key to obtain a plurality of respective encrypted measured data values by a fully homomorphic encryption using said secret key to obtain said encrypted measured data values, comprises

- generating a number of random numbers ;
- computing a sum of a *j-th* random number if a corresponding secret key coefficient is equal to one
- to said sum, also adding the data value to encrypt
- add a Gaussian noise,

said performing at the using entity a fully homomorphic decryption of said encrypted data values using said secret key comprising

computing a sum of a *j-th* random number if a corresponding secret key coefficient is equal to one;

- subtract the result to the last component of the encrypted data values.

In variant embodiments, said using entity is a power station which distributes energy to said environments as a function of said sum of said respective measured energy values at said energy consumption using entity.

In variant embodiments, the data collecting station comprises a respective Secure element and said separated entity shares with each secure element a set of Zero Tokens, corresponding to an encrypted zero value of the data encrypted by said encryption operation, each identified by a respective identifier, stored previously in the Secure Element with respect to encryption operations, in particular when the Secure Element is created,

during said encryption, said Secure Element is configured to randomly select a subset of said set of zero tokens, and generate respective random scalar weights and a vector containing said scalar weights, said identifiers and said encrypted sum data value, corresponding to said encrypted data value ($E$), which are sent to the using entity through the respective aggregator,

the using entity is configured to decrypt ausing the pre-shared token identifiers and the weights to compute the total of the collected data values as subtraction of the result to the last component of the encrypted data values.

In variant embodiments, the aggregator is configured to aggregate said encrypted data values of at least a subset of said set of said encrypted data values, and send to the to the using entity all the corresponding scalar weights and identifiers and a total sum of each encrypted sum of data values of the corresponding subset of smart meters.

In variant embodiments, said smart meter is configured to access a secure element storing said secret key, in particular said secure element is comprised in said smart meter.

In variant embodiments, said data values are utility consumption values, obtained by a smart metering of utility consumption values, comprising measuring a set of measured utility consumption values consumed by respective utility consuming environments by respective smart utility meters,

supplying said measured utility values to at least a utility consumption using entity located remotely with respect to said utility consuming environments,

performing one or more functions on the basis of said set of measured utility values at said using entity.

In variant embodiments, said utility consumption values are energy consumption values and said smart utility meters are smart energy meters.

Brief description of the annexed drawings

The embodiments of the present disclosure will now be described with reference to the annexed drawings, which are provided purely by way of nonlimiting example, and in which:

- Figure 1 shows schematically a metering system;
- Figure 2 shows a block schematics of a fully homomorphic encryption method;
- Figure 3 shows schematically a metering system according to embodiments;
- Figure 4 shows a further block schematics showing further aspects of the metering system according to embodiments;
- Figure 5 shows a flow diagram of a method according to embodiments.

Detailed description of embodiments

In the ensuing description, various specific details are illustrated, aimed at providing an in-depth understanding of the embodiments. The embodiments may be provided without one or more of the specific details, or with other methods, components, materials, etc. In other cases, known structures, materials, or operations are not illustrated or described in detail so that various aspects of the embodiments will not be obscured.

Reference to "an embodiment" or "one embodiment" in the framework of the present disclosure is intended to indicate that a particular configuration, structure, or characteristic described in relation to the embodiment is comprised in at least one embodiment. Hence, phrases such as "in an embodiment" or "in one embodiment" that may be present in various points of this description do not necessarily refer to one and the same embodiment. Moreover, particular conformations, structures, or characteristics may be combined in any adequate way in one or more embodiments.

The references used herein are provided only for convenience and hence do not define the sphere of protection or the scope of the embodiments.

The solution here described in general refers to a method for transmitting data values, which may correspond in preferred to utility, in particular, energy values privacy protected by encryption, from a set of data collecting stations, preferably, smart metering stations, collecting, in particular by measuring, respective data values from a respective environment and transmitting the respective set of data values, e.g., utility, in particular, energy values to a using entity, e.g. the power station PS located remotely with respect to said collecting stations. Thus, while preferably data values are utility consumption, in particular energy consumption, values, measured in utility consumption, in particular energy consumption, environments, the datavalues could be any data value which can be collected in an environment and can be aggregated by sum in an aggregator before being sent to the using station. Besides consumption, data values can in embodiment represent votes, e.g. electoral votes, or student scores or physical statistical data or company information data, e.g. annual income of the shops of a company, which can be aggregated by sum in an aggregator before being sent to the using station.

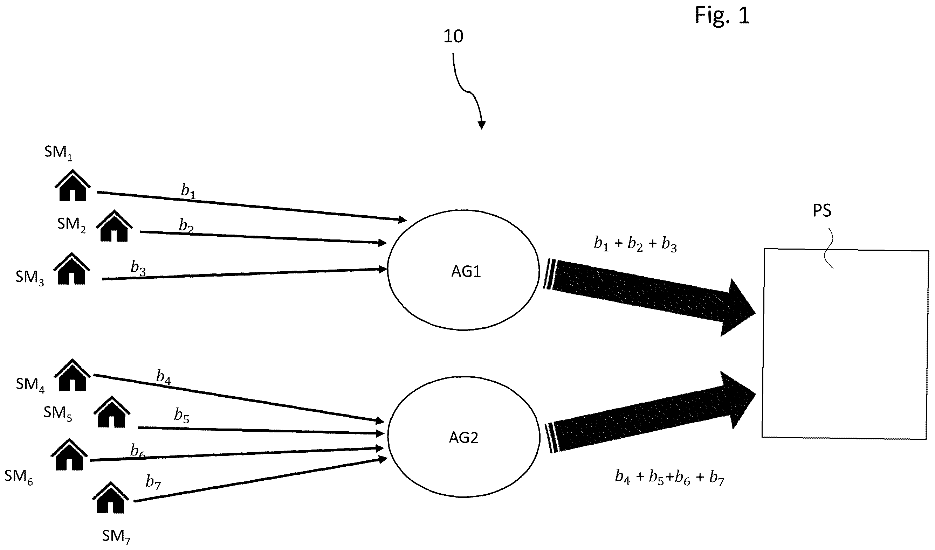

To this regard, Figure 1 shows schematically an architecture of a system of meters 10, comprising a plurality, i.e. a set, of smart meter $SM_i$, each sending a data value as measured energy value $b_i$, e.g. an energy balance, of a respective metered environment, e.g., a single house.

In figure 1 an index i goes from 1 to K, where in the example K is 7, represents the respective smart meter $SM_i$ which is associated to a respective metered environment. A subset of smart meter $SM_1$-SM3 feed their measured energy values $b_1$-$b_3$ to a first respective aggregator module AG1, which is configured to sum the energy values $b_1$ to $b_3$, supplying a first sum, i.e. aggregated value, equal to $b_1+b_2+b_3$ to a power station PS.

In the same way energy values $b_4$ to $b_7$ are supplied to a second aggregator AG2 supplying a second sum, equal to $b_4+b_5+b_6+b_7$ to the power station PS. Of course, there can be a different number of aggregators and/or different aggregation of the energy values $b_i$. The aggregator AG1 and AG2 are placed locally, e.g. correspond to aggregators aggregating measured energy values or balance of energy consuming enviroments, e.g. a house, of a same town. In the example shown there is an aggregator for each town, and $SM_1$-$SM_3$ are the smart meter of a first town, and $SM_4$-$SM_7$ are the smart meters of a second town.

In such an architecture of smart meters $SM_i$ the problem then becomes how the power station PS, which performs the task of dimensioning and distributing energy to the users, e.g. to the environments or houses in which are applied the smart meters SMi, can collect data with minimum impact on user privacy.

This can be performed by encryption of such collected data. For instance, fully homomorphic encryption is a way to encrypt data that allows arithmetic operation over the encrypted data.

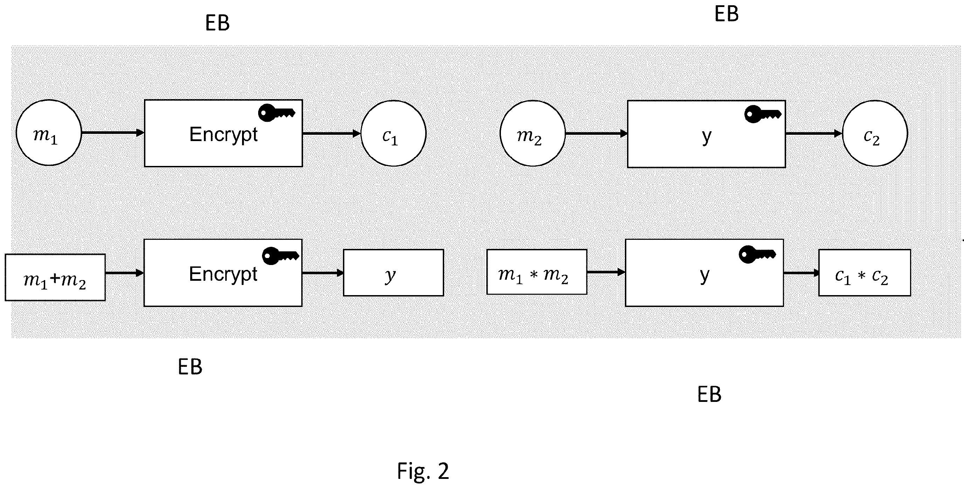

In figure 2 to this regard are represented schematically properties of the fully homomorphic encryption, where first input data m1 are encrypted in a encryption block EB which outputs first encrypted data c1, and second input data m2 are encrypted in the encryption block 11 which outputs second encrypted data c1. Encryption block 11 uses a user secret key s for the encryption of data. As shown, the fully homomorphic encryption encryption EB can operate as well on the sum of input data m1+m2, outputting a sum of c1 and c2, or on the product m1*m2 outputting the product Of the encrypted data c1*c2.

Besides input data being encrypted by a user secret key, arithmetic operations are thus performed "blindly" on encrypted data and the results can be decrypted only by using the user key.

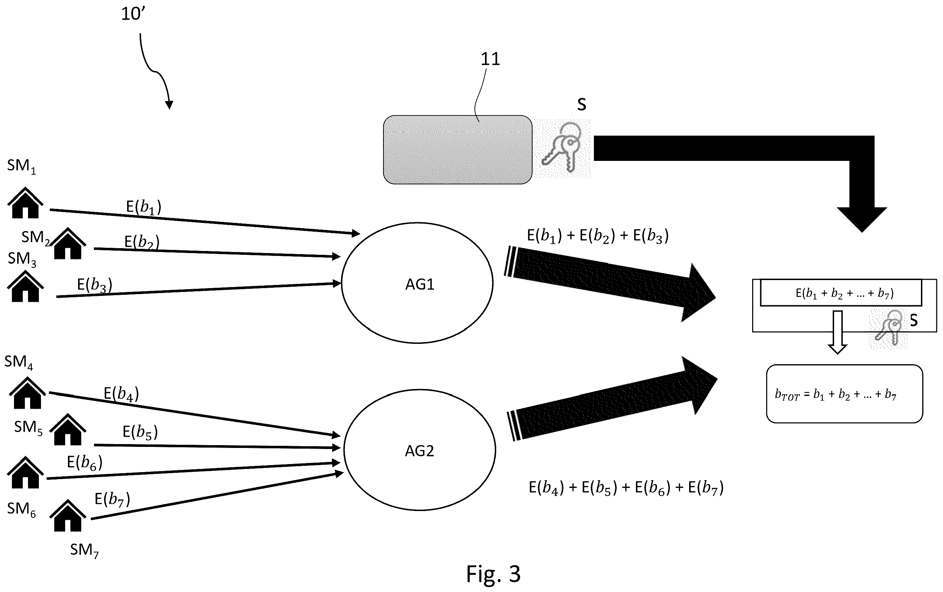

In figure 3 it shown an architecture of a system of meters 10' adapted to implement the method here described. Such system of meters 10' comprises as well the plurality of smart meter SMi, each sending in this case an encrypted energy balance $E(b_i)$, encrypted by a Fully Homomorphic Encrytpion of the respective metered environment, e.g., a single house, grouped in the example in the same manner by aggregators AG1, AG2, which in this case sum the encrypted energy balances, sending respective encrypted sum $E(b_1+b_2+b_3)$ and $E(b_4+b_5+b_6+b_7)$ to the power station PS. The power station PS receives from a server 11 a secret encryption key s and is configured to obtain a total encrypted energy balance $E(b_1+b_2+b_3+b_4+b_5+b_6+b_7)$ summing together the sums from the aggregators AG1, AG2. Then the power station PS is configured to perform a decryption of the total encrypted balance $E(b_1+b_2+b_3+b_4+b_5+b_6+b_7)$ obtaining a total energy balance $b_{tot}= b_1+b_2+b_3+b_4+b_5+b_6+b_7$.

The power station PS in this way knows only the total consumption, i.e., total measured energy or energy balance $b_{tot}$, since it has the secret key s for the decryption, of, e.g. $E(b_1+b_2+b_3)$ from the aggregatore AG1 or $E(b_4+b_5+b_6+b_7)$ from aggregator AG2, on the basis which, for instance, understand how much energy to divert to the respective aggregator or subset of smart meters, but it does not know or it can not know the single environment balance $b_i$, i.e. b1, b2,b3, b4, b5, b6, b7.

Each aggregator AG1, AG2, which is usually placed locally, i.e. remote with respect to the power station PS and preferably local with respect to the town or subset of smart meters/environments to which is associated, does not know the energy balances of the corresponding subset of smart meters, e.g. town, contributing their respective energy balances to such aggregator because it does not have the secret key s at disposal.

Thus, such aggregating said encrypted measured energy values $E(b_1)$ ... $E(b_7)$ is performed without decrypting encrypted measured energy values, $E(b_1)...E(b_7)$. Also, in embodiments such secret key s may be made available for decryption only to a using entity PS, i.e an entity which uses the decrypted energy for an energy managing function of the system, in particular excluding aggregators.

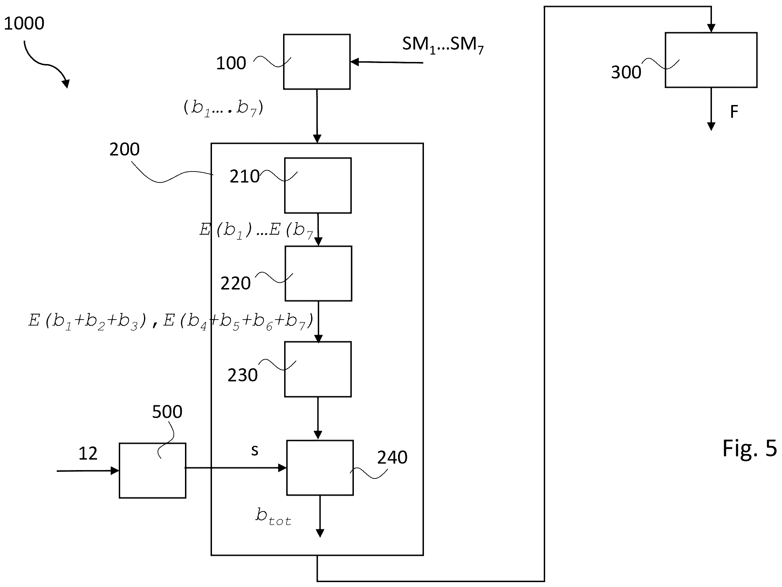

Now, the fully homomorphic encryption method, an embodiment of which is indicated with 1000 in the following with reference to figure 5, used by the solution here described is explained in general.

An LWE (Learning With Errors) ciphertext c encrypting a plaintext $p$ under a secret key $s$ is a tuple $c \in (\mathbb{Z}q)^{N+1}$ is obtained as follows.

Given an integer number N and an integer number k, with q=2$^k$ being an integer identifying the ring of integers modulo q $\mathbb{Z}q = \mathbb{Z}/q\mathbb{Z}$:

- generate a number $N$ of random numbers ($rand1, rand2, ..., rand_N) \in (\mathbb{Z}q)^N$, i.e. belonging to a set of N-vectors over the ring Zq.
- compute a summation ($mod\ q$) of the $j$-$th$ random number $rand_j$ with j index from 1 to N, if the corresponding secret key coefficient $s_j$=1, i.e. compute $\sum_{j=1}^{N} s_j rand_j\ (mod\ q)$;
- to said summation, also add the value to encrypt (i.e., the plaintext $p$);
- finally, add a Gaussian noise $e$, obtaining a LWE summation value $suml$:

$$lsum = p + \sum_{j=1}^{N} s_j rand_j + e \ (mod\ q)$$

Where $N$, $k \in \mathbb{N}$, $q = 2^k$, $B = \{0,1\}$, $\boldsymbol{s} = (s1, s2, ..., s_N) \in B^N$, $p \in \mathbb{Z}q = \mathbb{Z}/q\mathbb{Z} \in$ the cyphertext c belonging to $(\mathbb{Z}q)^{N+1}$. The LWE summation value $lsum$ is the sum of the plaintext and of the sum ($mod\ q$) of the $j$-th random number $randj$ which secret key coefficient $s_j$ is 1, plus the noise $e$.

Then, finally the LWE ciphertext computed is $\boldsymbol{c}$ = ($rand$1,$rand$2, ..., $rand_N$, $lsum$), i.e. a vector comprising as elements the random numbers and the LWE summation as last element.

Operations are performed for instance on 64-bit integers. With an adequate level of security (lambda = 128, lambda being an indication of the the desired security level of the scheme. For instance, 128-bit security ($\lambda$ = 128), as per the Homomorphic Encryption Standard (at URL: http://homomorphicencryption. org/wp-content/uploads/2018/11/HomomorphicEncryptionStandardv1.1.pdf)$N$=630.

Under this view, the the LWE ciphertext computed is $\boldsymbol{c}$ = ($rand$1,$rand$2, ..., $rand_N$,$suml$) may have a size around 5 kb.

Given again $N$, $k \in \mathbb{N}$, q = $2^k$,B = {0,1}, $\boldsymbol{s}$ = ($s$1, $s$2, ..., $s_N$) $\in$ $B^N$, an LWE ciphertext $\boldsymbol{c} = (rand1, rand2, ..., rand_N, suml) \in (\mathbb{Z}q)^{N+1}$, the decryption of the cyphertext $\boldsymbol{b}$ under the secret key $\boldsymbol{s}$ to obtain the plaintext $p \in \mathbb{Z}q$ is achieved as follows:

-    first, compute the summation ($mod\ q$) of each $j$-th random number $rand_j$, if the corresponding secret key coefficient $s_j=1$, i.e. $\sum_{j=1}^{N} s_j rand_j \ (mod\ q)$ ;

-    subtract said summation ($mod\ q$) to the last component of the ciphertext $\boldsymbol{c}$, which is the LWE summation value $suml$.

$$p = lsum - \sum_{j=1}^{N} s_j rand_j \ (mod\ q)$$

The obtained value is the decrypted value, i.e. the plaintext $p$.

Now, with reference to the specific application to metering, considering the encrypted energy value, or balance, $E(b)$, i.e. a generic encrypted energy value $b$ (which may correspond to a i-th energy value $\boldsymbol{b}_i$ measured by a smart meter $SM_i$ or a sum of energy values), as indicated above LWE summation value $lsumb$ of the energy is:

$$lsumb = b + \sum_{j=1}^{N} s_j rand_j + e \ (mod\ q)$$

resulting in the cyphertext:

$$\boldsymbol{c} = (rand1, rand2, ..., rand_N, lsumb)$$

It is noted here that the zero encrypted $E(0)$, i.e. the encryption of energy value b=0, has the following result for the LWE summation value $sumlb$:

$$lsumb(0) = \sum_{j=1}^{N} s_j rand_j + e \ (mod\ q)$$

So the encrypted energy balance can be expressed as:

$$E(b) = E(0) + b$$

Actually, as the zero encrypted E(0), i.e. encrypted by FHE encryption, contains random elements, it is possible to say that there are multiple zero encrypted components, called Zero Tokens, $E_j(0)$ (each representing 0), j being an index going from 1 to N, the number of random numbers.

For all the zero encrypted components $E_{\square}(0)$:

$$sumlb\ (0) = \sum_{j=1}^{N} s_j rand_j + e\ (mod\ q)$$

Due to the homomorphic properties, considering a number *m of* different Zero Tokens $E_j(0)$, a summation modulo q over the number *m of* different Zero Tokens $E_j(0)$, of the Zero Tokens $E_j(0)$ multiplied by a respective weight $a_j$, which may be any integer $\in \mathbb{Z}q$, with l index from 1 to m, i.e. a random scalar is:

$$\sum_{l=1}^{m} a_l E_l(0)\ (mod\ q)$$

and it is still a Zero Token $E_l(0)$,

Therefore, data encryption of a generic energy value *b* can then be obtained as:

$$E(b) = b + \sum_{l=1}^{m} a_l E_l(0)\ (mod\ q)$$

i.e, the summation modulo q over the number *m of* different Zero Tokens $E_l(0)$ plus the energy value b as plaintext.

The above operation can be realized as follows. The 1-th Zero Token $E_j(0)$, 1 index from 1 to m, corresponds to a 1-th cyphertext component, $c_l$:

$$E_l(0) = c_l = (rand_{1l}, rand_{2l}, ..., rand_N, sumlb_l)$$

The encrypted energy balance *E(b)* elements, the 1-th Zero Token random energy element $rand_{il}$ and the 1-th LWE Zero Token summation value element $lsumb_l$, both over the m selected Zero Tokens are computed as follows:

$$rand_{ib} = \sum_{l=1}^{m} a_l rand_{il}$$

$$lsumb_b = b + \sum_{l=1}^{m} a_l sumlb_l$$

Here Zero Token random energy element $rand_{il}$ and the LWE Zero Token summation value element $lsumb_b$ stand for random element and summation value element calculated with the Zero Tokens, i.e. over the m selected Zero Tokens and their weights.

Actually, only the LWE Zero Token summation value element $lsumb_b$ depends on the value of the measured energy *b* that represents the confidential information.

Hence, only the LWE Zero Token summation value $lsumb_b$ strictly needs to be computed by the secure element.

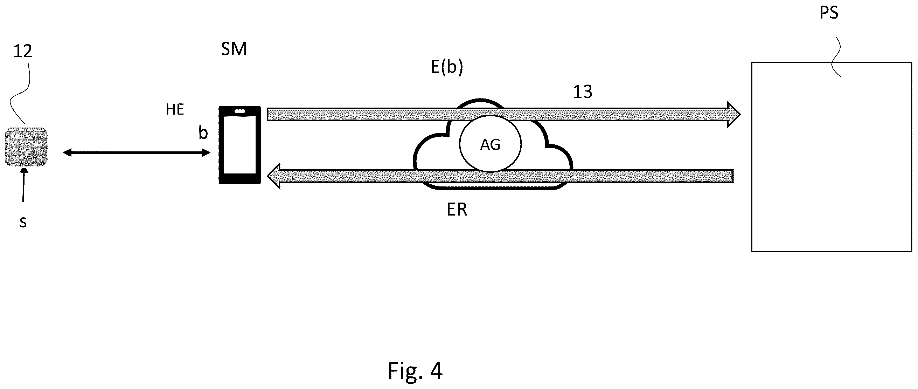

In figure 4 it is described an architecture which uses Secure Elements. This architecture in embodiments may store the secrete key s in the Secure Element. In embodiments this architecture may implement the Zero token approach, which can be used to improve the bandwidth and computation load of using the fully homomorphic encryption.

With 12 is indicated a Secure Element which is associated to the Smart Meter SM, e.g. is included within the Smart Meter SM, which stores the secret key s. The smart meter SM measures an energy value b, e.g. energy value and performs fully homomomorphic encryption HE (corresponding to operation 210 described in figure 5) of the measured energy value b using the secret key s in the Secure Element 12, which is then transmitted encrypted, e.g. as encrypted energy value *E(b),* to the power station PS, over a communication network 13, which includes at least a respective aggregator, e.g. AG1.

Also, it is shown that that results ER, data or commands (for instance related to the managing functions F, possibly, or also to repopulate tokens) may be transmitted from the power station PS to the smart meter SM, which may be encrypted by a standard cryptograpy (e.g. elliptic curves cryptography). A part from performing operations of the managing functions F. In embodiments, however the method here disclosed does not require sending back the encrypted results ER and decryption HD. Creation of a privacy-protected communication channel back from the power station PS to the smart meter SM is an additional aspect.

The number N of random numbers may be 630 so the secret key s is 630 bit, resulting in cyphertexts of around 5kb of size.

In embodiments, a Secure Element approach may be thus used, which provides that the secret key s is stored in a secure element in the smart meter SM. A secure element corresponds to a secure operating system in a tamper-resistant processor chip or secure component. It may exist in different forms, devices such as smart card, SIM/UICC, smart microSD or as part of a larger device as an embedded or integrated Secure Element.

As ciphertexts are so huge, massive reading of data may be an issue, e.g., for the bandwidth of data transmission therefore a zero token approach is taken. Therefore, the secret key s, which may be a bootstrapping key, is generated, e.g. in a separate processor or key generator, before issuance and delivered to the server 11 or to the cloud which then supplies the secret key s, e.g. to the power station PS, independently.

It is underlined that with the zero token approach, the Secure Element, e.g. 12, does not know the secret key s, only the Power Station knows the secret key s.

For the pre-shared zero tokens architecture a precondition is that the server 11 agrees with each secure element a set of Zero Tokens ($E_l(0)$).

By way of example, the secure element 12 may have pre-stored 32 Zero Tokens ($E_l(0)$), (each identified with a serial number, i.e. identifier($id_l$). The storage of the Zero Tokens ($E_l(0)$) is performed previously in the Secure Element 12 with respect to encryption operations, in particular at the creation of the Secure Element, e.g. initializion or personalization of profiles in the Secure Element.

Regarding the encryption in Secure element, the Secure Element 12 randomly selects a subset of the zero tokens e.g., 4 zero tokens) and creates 4 respective random scalars ($a_1$ ... $a_4$), i.e. weights, then it creates a vector containing:

$$E(b) = (a1, a2, ..., a_4, \ id1, id2, ..., id_4, lsumb)$$

where the encrypted sum energy balance element *lsumb* is:

$$lsumb = b + \sum_{j=1}^{m} a_l sum_l$$

1 ranging from 1 to 4, which in the example is the number of zero tokens chosen among the 32 pre-stored zero tokens.

In the above example, given sizeof() a function which measure the byte size of value, if sizeof($a_1$) is 1, sizeof($id_i$) is 2, sizeof($E(b)$) is 20 bytes (compared to the 5kb indicated above, without the Zero Token approach). The identifier $id_i$ may be represented by two bytes. For instance, a database may contain random weight values known by the Power Station PS; then on the Secure element 12 in the first smart meter SM1 it may be associated a given sets of random weight values, e.g. randoms with identifiers idi, e.g. 3232, 3321, 2112, 5532, i.e. with identifiers id; that are unique in the system, differently from the case they were numbered from 0 to 31 for each Secure Element 12). The server 11 looks up the identifier idi, eg. 3232 and associates with the random (231231, 432313, 53234234, 2312135, 1263243...) of about 5kb. In other words the server may have a number of set, eg. 1024, each of it comprising a number of random bytes, e.g. 630, of a given length, e.g 8 bytes. Thus, 1024 random correspond to about 5 kb. Instead of communicating such 5kb of random values, the Secure element 12 indicates only which of the 1024 random values has been used by that Secure element for that zero-token encoding. The indication is performed through a 2-bytes index which is different for each random value. To increase the entropy, the Secure Element 12 may have a number, e.g., 32 of random values of 5kb stored (so 32 of the 1024 that are spread in the system), and for each data sending it selects randomly four randoms in the set; it performs the operation locally at the Secure Element using the four 5kb random value selected but when it sends the result it sends only the corresponding four 2-bytes index values in the range 0..1023 that must be unique in the system.

The encrypted sum energy balance element *lsumb* lsumb is 8 byte (64 bit)

The aggregator, e.g. AG1, for instance receives encrypted measured values $E(b_i)$, i.e. readings from the various secure elements 12 or meters $SM_i$.

It performs the aggregation, calculating the aggregated summation *agsum*:

$$agsum = \sum_{i'=K1}^{K2} lsumb_{i'}$$

as the summation of LWE summation value lsumb over the respective subset $(b_1...b_3)$ or, $(b_4...b_7)$ of smart meters (thus i' is the subset index, going from K1 to K2, where K1=K2 for the first subset $(b_1...b_3)$ and K1=4, K2=7 for the second subset $(b_4...b_7)$ in the example) and sends to the power station PS:

- all the scalar weights $a_i$ ,
- all the token identifiers $id_i$,
- the resulting aggregated sum ag*sum.*

Thus, are sent to the power station PS all the corresponding scalar weights, $a_i$, identifiers ($id1$, $id2$, ..., $id_4$) and a total sum *agsum* of each encrypted sum energy value *sumlb* of the corresponding subset $(b_1...b_3)$, $(b_4...b_7)$ of smart meters..

Regarding the decryption at the power station PS, using the pre-shared token identifier *id* and all the various weights, the power station PS computes:

$$b = lsumb - \sum_{l=1}^{m} a_l agsumb_l$$

where the scalar weights $a_j$ and $sum_j$ are related to all the tokens aggregated by the aggregator AG.

In figure 5 it is shown a diagram flow exemplary of an embodiment of the method for smart metering of energy consumption values, which is indicated as a whole by the numeric reference 1000.

Also with reference to figure 3, the method 1000 for smart metering of energy consumption values, comprises a first operation of measuring 100 a set of measured energy values, $b_1....b_7$, consumed by respective energy consuming environments by respective smart energy meters, $SM_1...SM_7$, and then supplying 200 said measured energy values $b_1....b_7$ to at least an energy consumption using entity, e.g. the power station PS located remotely with respect to said energy consuming environments,

finally performing 300 one or more energy-related functions F, e.g. energy management functions F, for instance monitoring and/or energy distribution controlling and/or billing, on the basis of said set of measured energy values $b_1....b_7$, at said energy consumption using entity, e.g. power station PS.

The disclosed method specifically comprises that the supplying 200 includes

encrypting 210 said measured energy value $b_1.... b_7$ by a fully homomorphic encryption, or FHE, using a secret key s to obtain a plurality of respective encrypted measured energy values, $E(b_1)...E(b_7)$,
aggregating 220 said encrypted measured energy values $E(b_1)...E(b_7)$ of at least a subset $b_1...b_3$, $b_4...b_7$, in the example there are to pertaining agrregators AG1, AG2, respectively, of said set of said encrypted measured energy values $E(b_1)...E(b_7)$, in a respective encrypted aggregated value $E(b_1+b_2+b_3)$, $E(b_4+b_5+b_6+b_7)$, performing a sum of the respective encrypted measured energy values $E(b1)...E(b7)$ of said at least a subset $b_1...b_3$, $b_4...b_7$, said encrypting 210 being performed before said aggregating 220, in particular at said smart energy meters, $SM_1...SM_7$, supplying 230 said at least one encrypted aggregated value $E(b_1+b_2+b_3)$,$E(b_4+b_5+b_6+b_7)$ to said at least an energy consumption using entity, e.g. power station PS, located remotely with respect to said energy consuming environments, which is configured to receive, 500 said secret key (s) from a separated entity, in particular the server 11 or a cloud,
decrypting 240 using said secret key s at said at least an energy consumption using entity, PS, said at least one encrypted aggregated value $E(b_1+b_2+b_3)$,$E(b_4+b_5+b_6+b_7)$ obtaining a decrypted sum $b_{tot}$ of respective measured energy values $b_1...b_7$,
performing 300 one or more energy-related functions, e.g. energy management functions F, on the basis of said decrypted sum $b_{tot}$ of said respective measured energy values $b_1....b_7$ at said energy consumption using entity PS.

The encrypting 210 preferably comprises given an integer number, N, and a ring defining integer, i.e. $q=2^k$, identifying a ring 7Gq of integers modulo said ring defining integer q, i.e. *mod q*;

- generate a number $N$ of random numbers, e.g. ($rand1$, $rand2$, ..., $rand_N$), i.e. belonging to a set of N-vectors over the ring (Zq);
- compute a summation modulo said ring defining integer q of each *j-th* random number $rand_j$ in said number $N$ of random numbers ($rand1$, $rand2$, ..., $rand_N$) while a corresponding secret key binary coefficient ($s_j$) is equal to one;
- to said summation, also add an energy value ($b$) to encrypt as plaintext $p$;
- finally, add a Gaussian noise e, obtaining a LWE summation value *sumlb* for energy, as the sum of the energy value $b$ and said summation modulo said ring defining integer q plus the noise $e$,
- obtain a LWE ciphertext **c** as a vector comprising as elements the random numbers and the LWE summation as last element ($rand1$, $rand2$, ..., $rand_N$, $sumlb$), corresponding to an encrypted energy value $E(b)$, and

said decryption 240 using said secret key s at said at least an energy consumption using entity, e.g power station PS, comprising :

- computing a summation modulo said ring defining integer q of each *j-th* random number $rand_j$ in said number $N$ of random numbers ($rand1$, $rand2$, ..., $rand_N$), while a corresponding secret key binary coefficient $s_j$ is equal to one;
- subtracting said summation modulo said ring defining integer q from the last component of said ciphertext **c** corresponding to an encrypted energy value $E(b)$, which is the LWE summation value *sumlb*, obtaining an energy decrypted value b.

As mentioned, in embodiments, the using entity PS is a power station which, preferably, distributes 300 energy to said environments as a function of said decrypted sum $b_{tot}$ of said respective measured energy values, $b_1....b_7$) to said environments. In variant embodiments the using entity PS may be a water distribution station, a gas distribution station, or any utility distribution station, or also any entity which makes used of data value in aggregated form, which have to encrypted e.g. for privacy reasons.

Also, in variant embodiments, the smart energy meters $SM_1...SM_7$ may comprise a Secure element 12 and the separated entity 11 shares with each secure element 12 a set of Zero Tokens $E_j(0)$, corresponding to an encrypted zero value, identified by a respective identifier $id_j$, stored at the creation of the Secure Element 12,

during said encryption 210, the Secure Element is configured to randomly select a subset of said set of zero tokens $E_j$ (0), and generates respective random scalar weights $a_1 ... a_4$ and a vector containing said scalar weights said identifier and said encrypted sum energy balance element, $a1$, $a2$, ..., $a_4$ and $id1$, $id2$, ... , $id_4$, $sum$, which are sent to the using entity PS through the respective aggregator,e.g. AG1 or AG2,

decrypting, 240, at the using entity PS using the pre-shared token identifier $id1$, $id2$, ..., $id_4$ and the weights $a1$, $a2$, ..., $a_4$ to compute the total measured energy as subtraction of the result $sum_b$ to the last component of the encrypted energy values,i.e. E(b).

In general, also without the Zero Token approach, each smart meter SM may be configured to access a secure element 12 storing said secret key s, in particular said secure element 12 may be comprised in said smart meter SM.

As specified, in general the solution described refers to a method for transmitting data values, which may correspond in preferred to utility, in particular, energy values ($b_1....b_7$) privacy protected by encryption, e.g. FHE, from a set of data collecting stations $SM_1...SM_7$, preferably. smart metering stations, collecting, in particular by measuring, respective data values from a respective environment and transmitting the respective set of data values, e.g., utility, in particular, energy values ($b_1....b_7$) ($b_1....b_7$) to a using entity, e.g. the power station PS located remotely with respect to said collecting stations $SM_1...SM_7$. Thus, while preferably data values are utility consumption, in particular energy consumption, values, measured in utility consumption, in particular energy consumption, environments, the datavalues could be any data value which can be collected in an environment and can be aggregated by sum in an aggregator before being sent to the using station.

Thus, based on the above, the advantages of the described solution are clear.

The solution described here allows to protect the sensitive information which may be associated to the consumption data using a fully homomorphic encryption where the secret key is not known to the aggregators while is made known independently at the using entity, e.g. power station. The use of Zero Token advantageously lowers the bandwidth reuirements of the fully homomorphic encryption.

Of course, without prejudice to the principle of the invention, the details of construction and the embodiments may vary widely with respect to what has been described and illustrated herein purely by way of example, without thereby departing from the scope of the present invention, as defined by the ensuing claims.

**Claims**

1. A method for transmitting data values ($b_1....b_7$) privacy protected by encryption from a set of data collecting stations ($SM_1...SM_7$) collecting respective data values from a respective environment and transmitting the respective set of data values ($b_1....b_7$) to a using entity (PS) located remotely with respect to said collecting stations ($SM_1...SM_7$),

   the method comprising encrypting (210) said set of data values ($b_1....b_7$) by a fully homomorphic encryption using a secret key (s) to obtain a plurality of respective encrypted data values ($E(b_1)...E(b_7)$), aggregating (220) said encrypted remote data ($E(b_1)...E(b_7)$) of at least a subset ($b_1...b_3$, $b4...b_7$) of said set of said encrypted remote data in a respective encrypted aggregated value ($E(b_1+b_2+b_3),E(b_4+b_5+b_6+b_7)$) performing a sum of the respective encrypted data values of said at least a subset $b_1...b_3$, $b_4...b_7$), said encrypting (210) being performed before said aggregating (220), in particular at said collecting stations ($SM_1...SM_7$),
   performing (300) one or more functions on the basis of said set of data values ($b_1....b_7$) at said using entity (PS), the method further comprising
   supplying (230) said at least one encrypted aggregated value ($E(b_1+b_2+b_3),E(b_4+b_5+b_6+b_7)$) to said using entity (PS), which is configured to receive (500) said secret key (s) from a separated entity (11), in particular a server or a cloud,
   decrypting (240) using said secret key (s) at said at least a using entity (PS) said at least one encrypted aggregated value ($E(b_1+b_2+b_3),E(b_4+b_5+b_6+b_7)$) obtaining a decrypted sum ($b_{tot}$) of respective data values $b_1....b_7$),
   performing (300) one or more data-related functions (F) on the basis of said decrypted sum ($b_{tot}$) of said respective data values ($b_1....b_7$) at said using entity (PS).

2. A method (1000) according to claim 1, wherein said data values are utility consumption values, obtained by a smart metering of utility consumption values, comprising measuring (100) a set of measured utility consumption values ($b_1....b_7$) consumed by respective utility consuming environments by respective smart utility meters ($SM_1...SM_7$),

   supplying (200) said measured utility values ($b_1....b_7$) to at least a utility consumption using entity (PS) located remotely with respect to said utility consuming environments,
   performing (300) one or more functions on the basis of said set of measured utility values ($b_1....b_7$) at said using entity (PS).

3. A method (1000) according to claim 1, wherein said utility consumption values are energy consumption values and said smart utility meters are smart energy meters ($SM_1...SM_7$).

4. A method according to claim 1 wherein said encrypting (210) said set of data values ($b_1....b_7$) by a fully homomorphic encryption using a secret key (s) to obtain a plurality of respective encrypted collected data values ($E(b_1)...E(b_7)$), comprises,

   given an integer number (N) and a ring defining integer (q) identifying a ring (Zq) of integers modulo said ring defining integer (q);

   - generate a number $N$ of random numbers (($rand1$, $rand2$, ..., $rand_N$)), i.e. belonging to a set of N-vectors over the ring (Zq);
   - compute a summation modulo said ring defining integer (q) of each ($j$-$th$) random number ($rand_j$) in said number $N$ of random numbers (($rand1$, $rand2$, ..., $rand_N$)) while a corresponding secret key binary coefficient ($s_j$) is equal to one;
   - to said summation, also add a data value (b) to encrypt as plaintext (p);
   - finally, add a Gaussian noise (e), obtaining a LWE summation value *(sumlb), as the* the sum of the the data value (b) and said summation modulo said ring defining integer (q) plus the noise (e)
   - obtain a LWE ciphertext (**c**) a vector comprising as elements the random numbers and the LWE summation as last element (($rand1$, $rand2$, ..., $rand_N$, $sumlb$)), *corresponding to an encrypted data value (E(b)),* and

   said decryption (240) comprises using said secret key (s) at said at least a data value using entity (PS), said at least one encrypted aggregated value ($E(b_1+b_2+b_3),E(b_4+b_5+b_6+b_7)$) obtaining a decrypted sum ($b_{tot}$) of respective collected data values ($b_1...b_7$), comprising :

   - compute a summation modulo said ring defining integer (q) of each ($j$-$th$) random number ($rand_j$) in said

number $N$ of random numbers $((rand1, rand2, ..., rand_N))$ while a corresponding secret key binary coefficient $(s_j)$ is equal to one;
- subtract said summation modulo said ring defining integer (q) from the last component of said ciphertext **(c)** corresponding to an encrypted data value *(E(b))*, which is the LWE summation value *(sumlb)*, obtaining a decrypted data value (b).

5. A method according to any of the preceding claims, wherein said using entity (PS) is a power station which distributes energy to said environments as a function of said sum $(b_{tot})$ of said respective measured energy values $(b_1....b_7)$ at said energy consumption using entity (PS).

6. A method according to any of the preceding claims, wherein the stations in the set of collecting stations $(SM_1...SM_7)$ comprise a respective Secure element (12) and said separated entity (11) shares with each secure element (12) a set of Zero Tokens $(E_j(0))$, corresponding to an encrypted zero data value encrypted by said encryption operation (210), each identified by a respective identifier $(id_j)$, stored previously in the Secure Element (12) with respect to encryption operations, in particular when the Secure Element is created,

> during said encryption (210), said Secure Element (12) is configured to randomly select a subset of said set of zero tokens $(E_j(0))$, and generate respective random scalar weights $(a_1 ... a_4)$ and a vector containing said scalar weights $(a_1 ... a_4)$, said identifiers $(id1, id2, ..., id_4)$ and said encrypted sum of data values *(sumlb)*, corresponding to said encrypted data value *(E(b))*, which are sent to the using entity (PS) through the respective aggregator (AG1, AG2),
> decrypting (240) at the using entity (PS) using the pre-shared token identifier $(id1, id2, ..., id_4)$ and the weights $(id1, id2, ..., id_4)$ to compute the total of the collected data values as subtraction of the result $(sum_b)$ to the last component of the encrypted data values *(E(b))*.

7. A method according to claim 6, wherein said sending to the using entity (PS) through the respective aggregator (AG1, AG2) includes aggregating (220) said encrypted data values $(E(b_1))$ of at least a subset $(b_1... b_3, b_4...b_7)$ of said set of said encrypted measured data values $(E(b_1)...E(b_7))$, and sending to the to the using entity (PS) all the corresponding scalar weights $(a_1 ... a_4)$ and identifiers $(id1, id2, ..., id_4)$ and a total sum of each encrypted sum data value *(sumlb)* of the corresponding subset $(b_1...b_3, b_4...b_7)$ of smart meters.

8. A method according to any of the preceding claims, wherein said aggregating said encrypted measured data values $(E(b_1)...E(b_7))$ is performed without decrypting encrypted measured data values $(E(b_1)...E(b_7))$.

9. A method according to any of the preceding claims, wherein said secret key (s) is made available for decryption only to a using entity (PS).

10. A method according to any of the preceding claims, wherein said secret key (s) is stored in a secure element accessible to a station or smart meter for performing encryption (HE).

11. A system for transmitting data values $(b_1....b_7)$ privacy protected by encryption from a set of data collecting stations $(SM_1...SM_7)$ collecting respective data values from a respective environment and transmitting the respective set of data values $(b_1....b_7)$ to a using entity (PS) located remotely with respect to said collecting stations $(SM_1...SM_7)$,,

> a data values using entity (PS) located remotely with respect to said data value consuming environments to which said set of stations $(SM_1...SM_7)$ is configured to supply said measured data values $(b_1....b_7)$,
> said data values using entity (PS) being configured to perform one or more functions on the basis of said set of collected data values $(b_1.... b_7)$,
> said system being configured to encrypt said measured data values (b) by a fully homomorphic encryption using a secret key (s) to obtain a plurality of respective encrypted data values $(E(b_1)...E(b_7))$,
> said system comprising one or more aggregating entity (AG1, AG2) configured to aggregate said encrypted data values $(E(b_1)...E(b_7))$ of at least a subset $(b_1...b_3, b_4...b_7)$ of said set of said encrypted data values $(E(b_1)...E(b_7))$ in a respective encrypted aggregated value $(E(b_1+b_2+b_3), E(b_4+b_5+b_6+b_7))$ performing a sum of the respective encrypted data values $(E(b_1)...E(b7))$ of said at least a subset $(b_1... b_3, b_4...b_7)$, said encryption being performed before said aggregating, in particular at said stations (SM1... SM7),
> said one or more aggregating entity (AG1, AG2) being configure to supply said at least one encrypted aggregated value $(E(b_1+b_2+b_3), E(b_4+b_5+b_6+b_7))$ to said at least a data values consumption using entity (PS) located remotely with respect to said data using environments, which is configured to receive said secret key (s) from a separated entity (11), in particular a server or a cloud,
said data value using entity (PS) being configure to decrypt using said secret key (s) said at least one encrypted aggregated value ($E(b_1+b_2+b_3),E(b_4+b_5+b_6+b_7)$) obtaining a decrypted sum ($b_{tot}$) of respective collected data values ($b_1... b_7$), and
to perform one or more data-related functions on the basis of said sum ($b_{tot}$) of said respective collected data values ($b_1....b_7$) at said data values using entity (PS).

12. A system according to claim 11, wherein said data values are utility consumption values, obtained by a smart metering of utility consumption values, comprising measuring (100) a set of measured utility consumption values ($b_1....b_7$) consumed by respective utility consuming environments by respective smart utility meters ($SM_1...SM_7$),

    supplying (200) said measured utility values ($b_1....b_7$) to at least a utility consumption using entity (PS) located remotely with respect to said utility consuming environments,
    performing (300) one or more functions on the basis of said set of measured utility values ($b_1....b_7$) at said using entity (PS).

13. A system according to any of the preceding claims 11 to 12, wherein said utility consumption values are energy consumption values and said smart utility meters are smart energy meters ($SM_1...SM_7$).

14. A system according to to any of the preceding claims 11 to 13, wherein said encrypting said collected data value (b) using a secret key (s) to obtain a plurality of respective encrypted measured data values ($E(b_1)...E(b_7)$) by a fully homomorphic encryption using said secret key (s) to obtain said encrypted measured data values ($E(b1)...E(b7)$), comprises

    - generating a number (N) of random numbers (*rand* 1, *rand2, ... , rand_N*);
    - computing a sum ($sum_b$) of a *j-th* random number (*randj*) if a corresponding secret key coefficient (*sj*) is equal to one
    - to said sum ($sum_b$), also adding the data value ($b_1....b_7$) to encrypt
    - add a Gaussian noise (*e*),
    said performing at the using entity (PS) a fully homomorphic decryption of said encrypted data values (E(b)) using said secret key (s) comprising
    computing a sum ($sum_b$) of a *j-th* random number *(randj)* if a corresponding secret key coefficient (*sj*) is equal to one;
    - subtract the result ($sum_b$) to the last component of the encrypted data values *(E(b))*.

15. A system according to any of the preceding claims 11 to 14, wherein said using entity (PS) is a power station which distributes energy to said environments as a function of said sum ($b_{tot}$) of said respective measured energy values ($b_1....b_7$) at said energy consumption using entity (PS).

16. A system according to any of the preceding claims 11 to 15, wherein the data collecting station ($SM_1...SM_7$) comprises a respective Secure element (12) and said separated entity (11) shares with each secure element (12) a set of Zero Tokens ($E_l(0)$), corresponding to an encrypted zero value of the data encrypted by said encryption operation (210), each identified by a respective identifier (*id_l*), stored previously in the Secure Element (12) with respect to encryption operations, in particular when the Secure Element is created,

    during said encryption (210), said Secure Element (12) is configured to randomly select a subset of said set of zero tokens ($E_l(0)$), and generate respective random scalar weights ($a_1 ... a_4$) and a vector containing said scalar weights ($a_1 ... a_4$), said identifiers (*id*1, *id*2, ..., *id_4*) and said encrypted sum data value (*sumlb*), corresponding to said encrypted data value *(E(b)),* which are sent to the using entity (PS) through the respective aggregator (AG1, AG2),
    the using entity (PS) is configured to decrypt (240) ausing the pre-shared token identifiers (*id*1, *id*2, ..., *id_4*) and the weights (*id*1, *id*2, ..., *id_4*) to compute the total of the collected data values as subtraction of the result ($sum_b$) to the last component of the encrypted data values *(E(b))*.

17. A system according to claim 16, wherein the aggregator (AG1, AG2) is configured to aggregate (220) said encrypted data values ($E(b_l)$) of at least a subset ($b_1...b_3$, $b4...b_7$) of said set of said encrypted data values ($E(b_1)...E(b_7)$), and send to the to the using entity (PS) all the corresponding scalar weights ($a_1 ... a_4$) and identifiers (*id*1, *id*2, ..., *id_4*) and a total sum of each encrypted sum of data values *(sumlb)* of the corresponding subset ($b_1...b_3$, $b_4...b_7$) of smart meters.

18. A system according to any of claims 11 to 17, wherein said smart meter (SM) is configured to access a secure element (12) storing said secret key (s), in particular said secure element (12) is comprised in said smart meter (SM).

19. A system according to any of the preceding claims 11 to 18, wherein said data values are utility consumption values, obtained by a smart metering of utility consumption values, comprising measuring (100) a set of measured utility consumption values ($b_1....b_7$) consumed by respective utility consuming environments by respective smart utility meters ($SM_1...SM_7$),

supplying (200) said measured utility values ($b_1....b_7$) to at least a utility consumption using entity (PS) located remotely with respect to said utility consuming environments,
performing (300) one or more functions on the basis of said set of measured utility values ($b_1....b_7$) at said using entity (PS).

20. A system according to any of the preceding claims 11 to 19, wherein said utility consumption values are energy consumption values and said smart utility meters are smart energy meters ($SM_1...SM_7$).

Fig. 1

EP 4 498 634 A1

Fig. 2

Fig. 3

Fig. 4

Fig. 5

EP 4 498 634 A1

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/329438 A1 (ZHANG XIAOJUN [CN] ET AL) 13 October 2022 (2022-10-13) <br> * abstract * <br> * paragraphs [0002] - [0049] * <br> ----- | 1-20 | INV. <br> H04L9/00 |
| X | CN 104 125 074 A (STATE GRID CORP CHINA; JIANGSU ELECTRIC POWER CO ET AL.) 29 October 2014 (2014-10-29) <br> * abstract * <br> * "Detailed ways" * <br> ----- | 1-20 | |
| X | CN 112 636 896 A (UNIV SOUTHWEST PETROLEUM) 9 April 2021 (2021-04-09) <br> * abstract * <br> * "Detailed ways" * <br> ----- | 1-20 | |
| | | | **TECHNICAL FIELDS SEARCHED (IPC)** <br><br> H04L |

The present search report has been drawn up for all claims

| Place of search | Date of completion of the search | Examiner |
|---|---|---|
| Munich | 17 July 2024 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7992

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | | Publication date | Patent family member(s) | | Publication date |
|---|---|---|---|---|---|
| US 2022329438 | A1 | 13-10-2022 | CN | 111294366 A | 16-06-2020 |
| | | | US | 2022329438 A1 | 13-10-2022 |
| | | | WO | 2021227241 A1 | 18-11-2021 |
| CN 104125074 | A | 29-10-2014 | NONE | | |
| CN 112636896 | A | 09-04-2021 | CN | 111082920 A | 28-04-2020 |
| | | | CN | 112636896 A | 09-04-2021 |

EPO FORM P0459

For more details about this annex : see Official Journal of the European Patent Office, No. 12/82